# EUROPEAN PATENT SPECIFICATION

(11) **EP 1 960 261 B1**
(45) Date of publication and mention of the grant of the patent: **01.12.2010**
(21) Application number: 06829672.2
(22) Date of filing: 15.12.2006
(51) Int. Cl.: B64C 1/00, B64F 5/00

(54) **AIRCRAFT WITH MODULAR STRUCTURE**
FLUGZEUG MIT MODULARER STRUKTUR
AERONEF DOTE D UNE STRUCTURE MODULAIRE

(30) Priority: 16.12.2005 DE 102005060369; 16.12.2005 US 750955 P
(43) Date of publication of application: 27.08.2008
(73) Proprietor: Airbus Operations GmbH, 21129 Hamburg (DE)
(72) Inventor: HOFFJANN, Claus, 21147 Hamburg (DE); SCHULDZIG, Hansgeorg, 21635 Jork (DE)
(74) Representative: Kopf, Korbinian Paul
(86) International application number: PCT/EP2006/012142
(87) International publication number: WO 2007/068499

(56) References cited:
- WO-A-99/39975
- GB-A- 2 326 863
- US-A1- 2004 195 454
- US-A1- 2005 178 880
- US-A1- 2005 178 912

## Description

### Field of the invention:

The invention relates to an aircraft with modular structure.

### Technical background of the invention:

In aircraft, especially for civil aviation, there are particularly stringent requirements relating to the flexibility of equipment- and performance characteristics.

GB 2 326 863 describes an aircraft with a fuselage to contain a plurality of modules, each module being designed to accommodate passengers or cargo and being removable from the fuselage for loading and unloading to take place remote from the fuselage. US 2005/0178912 A1 describes a transformable airplane that may be reconfigured to perform different missions by installing or replacing mission specific modules as desired. The aircraft includes a pair of wings and an aircraft body having at least one bay defined in an interior of the aircraft body, wherein the bay is configured to accept a plurality of removably replaceable modules that configure the aircraft to perform a plurality of missions. WO 99/39975 describes a method of manufacture and assembly for an aircraft comprising the manufacture of a range of dual function structural modules. A modular wing forms a part of the structure of the aircraft, for example podded modular engine units are mounted by the means of structural interface locations. US 2004/0195454 A1 describes a method for forming a blended wing body aircraft with a modular body. The configuration or cargo capacity of the aircraft can be varied by adding or subtracting intermediate body structures by adding or subtracting segments from the lateral sides of the aircraft body. US 2005/0178880 A1 describes an auxiliary fuel tank system for an aircraft.

### Summary of the invention:

It is the object of the invention to create an aircraft that can be flexibly adapted to different equipment- and performance characteristics.

This object is met as disclosed in claim 1. Advantageous embodiments of the invention are stated in the dependent claims.

According to an exemplary embodiment of the invention an aircraft comprises a module carrier for accommodating a plurality of module elements in which in each case at least one system element is integrated. The system elements assume individual tasks that are necessary in relation to the aircraft or the flight mission. In this arrangement it is also possible for several system elements to be present within one module element.

By changing individual or all modules, in this way it is possible to achieve different equipment- and performance variants of the same aircraft model. Furthermore, by leaving out individual module elements that are not required at the time for a particular mission, it becomes possible to activate savings potentials by means of a reduction in weight.

In each case the module elements and/or the system elements are networked among each other. By networking system elements also among different module elements, the capability of the overall system can be influenced or adapted. Furthermore, with this design the balance of the aircraft can be influenced.

According to another exemplary embodiment of the invention, it is possible to design passenger module elements that are boarded by passengers, or to design freight module elements that are filled with freight, while these module elements are outside the aircraft, with said module elements subsequently being placed in a corresponding accommodation device of the aircraft. Furthermore, it is possible for these passenger modules or freight modules to be moved (transported) also by other means of transport, for example by rail, ship, etc.

### Short description of the drawings:

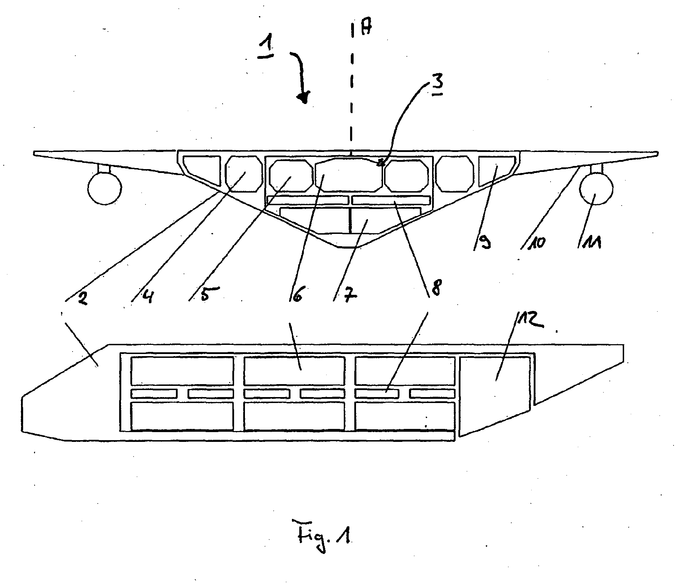

Below, with reference to Fig. 1, an exemplary embodiment of the invention is described.

### Detailed description of exemplary embodiments:

Fig. 1 shows a cross section and a longitudinal section of an aircraft 1 which comprises a modular design, according to the an exemplary embodiment. The aircraft 1 comprises a module carrier 2 for accommodating a plurality of module elements 3 to 9, which will be described in detail later.

As shown in Fig. 1, the module carrier 2 comprises a fuselage of any shape with at least one aerofoil 10. The aerofoil or wing 10 and the fuselage of the aircraft 1 can for example be a combined component.

According to the exemplary embodiment, the aerofoil 10 comprises an external system module 11, for example an auxiliary tank. Although not shown in the figure, a plurality of such external modules can be affixed to the outside of the aerofoil 10 or the fuselage of the aircraft 1.

According to the exemplary embodiment, the fuselage of the aircraft 1 comprises two freight modules 7 in order to accommodate freight (not shown). Above the freight modules 7 in each case there are floor modules 8. According to the exemplary embodiment, above the floor modules 8 there are passenger modules 5, 6 for accommodating passengers.

Furthermore, according to the exemplary embodiment, the aircraft 1 comprises propulsion modules 4 to generate movement of the aircraft 1 and thus a flow against the aerofoil 10, which flow is necessary to generate lift.

According to the exemplary embodiment, the aircraft 1 further comprises two tank modules 9, which are arranged in the fuselage of the aircraft 1.

As shown in Fig. 1, according to the exemplary embodiment the above-mentioned module elements 4,5, 7, 8 and 9 are arranged symmetrically on an axis A. The passenger module element 6 is preferably symmetrically divided by the axis A. Any desired number of the above-mentioned module elements and any desired arrangement (including an asymmetrical arrangement) can be used.

In each instance the above-mentioned module elements comprise integrated system elements that are networked among each other. Furthermore, the individual module elements or their integrated system elements are networked with each other so as to meet a required equipment- and performance characteristic of the aircraft 1.

Fig. 1 further shows a supply-/disposal element for supplying the aircraft 1 for example with hydrocarbon-based fuel, hydrogen, oxygen, water, any gases, liquids and/or solids. Furthermore, the supply-/disposal module element 12 is used for the disposal of at least waste water, any gases, liquids and/or solids.

Although the invention was described with reference to an exemplary embodiment, it is of course possible to make modifications and changes without leaving the protective scope of the invention.

For example, other module elements, either more or fewer of them, can be used, depending on the respective requirements relating to the aircraft 1 or to the aircraft mission.

Furthermore, the system elements integrated in the individual module elements can be any imaginable system elements, for example comprising: a hydraulic system element; a pneumatic system element; an energy supply system element; an electrical system element; a cooling system element; an air conditioning system element; a water supply system element; a waste water disposal system element; a gas supply system element; a liquid supply system element; an exhaust gas disposal system element; a liquid disposal system element; a communication system element; a control system element; a data transmission system element; an emission element for heat or light; an element for functions of the aircraft operation; an element for safety functions; an element for comfort or the supply to passengers or crew; an element for the transport of passengers, for example a seating cabin or a sleeping cabin; an element for the transport of freight, etc.

Any number and any type and manner of the above-mentioned individual system elements can be integrated in the individual above-mentioned module elements.

### List of reference characters

- 1: Aircraft
- 2: Module carrier
- 3: Module element
- 4: Propulsion module element
- 5: Passenger module element
- 6: Passenger module element
- 7: Freight module element
- 8: Floor module element
- 9: Tank module element
- 10: Aerofoil/Wing
- 11: External module element
- 12: Supply-/disposal module element

## Claims

1. An aircraft comprising
a module carrier (2);
a plurality of module elements (3);
a plurality of integrated system elements;
wherein the module carrier accommodates the plurality of module elements (3);
wherein each module element (3) comprises at least one integrated system element;
wherein an accommodated module element (3) comprises a propulsion unit for propelling the aircraft (1) ;
wherein the module carrier (2) comprises a module element that forms at least part of a fuselage and/or of an aerofoil (10); **characterized in that** the module element comprising the propulsion unit (4) is either situated within the fuselage or the aerofoil (10) and is accessible from the outside on the fuselage or the aerofoil (10), or forms part of the fuselage structure or the aerofoil structure.

2. The aircraft of claim 1, wherein an accommodated module element comprises a lift unit for generating lift of the aircraft (1), and/or a transport unit for the transport of passengers or freight.

3. The aircraft of claim 1, wherein the module elements (3) are individually exchangeable.

4. The aircraft of claims 1, 2 or 3, wherein the system elements in the case of an installed or deinstalled module element (3) are arranged to be exchangeable.

5. The aircraft of any one of claims 1 to 4, wherein the module elements (3) and/or the system elements form a network.

6. The aircraft of claim 5, wherein the network comprising module elements (3) and / or comprising system elements reflects an overall function.

7. The aircraft of any one of claims 5 or 6, wherein the network comprising module elements (3) or system elements is arranged to be redundant.

8. The aircraft of any one of claims 1 to 7, wherein by combining various module elements and/or by equipping identical module elements with different system elements different variants of an aircraft model can be implemented.

9. The aircraft of claim 8, wherein all the module elements within the same aircraft model or with other aircraft models of the same design are exchangeable, wherein the aircraft models may differ as far as their size, flying range and performance data are concerned.

10. The aircraft of any one of claims 1 to 9, wherein the module elements (3) can be assembled, loaded, or boarded by passengers while said module elements (3) are outside the aircraft (1).

11. The aircraft of any one of claims 1 to 10, wherein the module elements (3) are movable by another transport system.

12. The aircraft of any one of claims 1 to 11, wherein the module carrier (2) comprises at least one fuselage of any shape, and at least one aerofoil (10), with the fuselage and the aerofoil (10) forming a combined component.

13. The aircraft of any one of claims 1 to 12, wherein at least one module element (12) is used for the supply to the aircraft (1), and at least one module element (12) is used for disposal from the aircraft (1).

14. The aircraft of claim 13, wherein the supply module element (12) supplies the aircraft (1) with at least one of the following media: hydrocarbon-based fuel, hydrogen, oxygen, water, any gases, liquids or solids, and/or wherein the disposal module (12) is used for the disposal of at least one of the following media: waste water, any gases, liquids or solids.

15. The aircraft of any one of claims 1 to 14, wherein the system element is at least one of the following: a hydraulic system element; pneumatic system element; energy supply system element; electrical system element; cooling system element; air conditioning system element; water supply system element; waste water disposal system element; gas supply system element; liquid supply system element; exhaust gas disposal system element; liquid disposal system element; communication system element; control system element; data transmission system element; emission element for heat or light; element for functions of the aircraft operation; element for safety functions; element for comfort or the supply to passengers or crew; element for the transport of passengers; or element for the transport of freight.

## Patentansprüche

1. Luftfahrzeug mit
einem Modulträger (2);
einer Mehrzahl von Modulelementen (3);
einer Mehrzahl von integrierten Systemelementen;
wobei der Modulträger die Mehrzahl von Modulelemente (3) aufnimmt;
wobei jedes Modulelement (3) wenigstens ein integriertes Systemelement aufweist;
wobei ein aufgenommenes Modulelement (3) eine Vortriebseinheit zum Antreiben des Luftfahrzeugs (1) aufweist;
wobei der Modulträger (2) ein Modulelement aufweist, das wenigstens einen Teil eines Rumpfs und/oder einer Tragfläche (10) bildet;
**dadurch gekennzeichnet, dass** das Modulelement, das die Vortriebseinheit (4) aufweist, entweder innerhalb des Rumpfes oder der Tragfläche (10) angeordnet ist und von außen an dem Rumpf oder der Tragfläche (10) zugänglich ist, oder einen Teil der Rumpf- oder Tragflächenstruktur bildet.

2. Luftfahrzeug nach Anspruch 1, wobei ein aufgenommenes Modulelement eine Auftriebseinheit zum Erzeugen eines Auftriebs des Luftfahrzeugs (1)), und/oder eine Transporteinheit zum Transportieren von Passagieren oder Fracht aufweist.

3. Luftfahrzeug nach Anspruch 1, wobei die Modulelemente (3) einzeln austauschbar sind.

4. Luftfahrzeug nach Anspruch 1, 2 oder 3, wobei die Systemelemente bei eingebautem oder bei ausgebautem Modulelement (3) austauschbar ausgeführt sind.

5. Luftfahrzeug nach einem der Ansprüche 1 bis 4, wobei die Modulelemente (3) und/oder Systemelemente ein Netzwerk bilden.

6. Luftfahrzeug nach Anspruch 5, wobei das Netzwerk, das Modulelemente (3) und/oder Systemelemente aufweist, eine Gesamtfunktion abbildet.

7. Luftfahrzeug nach einem der Ansprüche 5 oder 6, wobei das Netzwerk aus Modulelementen (3) oder Systemelementen redundant aufgebaut ist.

8. Luftfahrzeug nach einem der Ansprüche 1 bis 7, wobei durch Kombination unterschiedlicher Modulelemente und/oder Ausstatten von gleichen Modulelementen mit unterschiedlichen Systemelementen unterschiedliche Varianten eines Luftfahrzeugmusters realisierbar sind.

9. Luftfahrzeug nach Anspruch 8, wobei alle Modulelemente innerhalb desselben Flugzeugmusters oder mit anderen Flugzeugmustem gleicher Bauweise austauschbar sind, wobei sich die Flugzeugmuster in Größe, Reichweite und Leistungsdaten unterscheiden können.

10. Luftfahrzeug nach einem der Ansprüche 1 bis 9, wobei die Modulelemente (3) außerhalb des Luftfahrzeugs (1) bestückt, beladen oder bestiegen werden können.

11. Luftfahrzeug nach einem der Ansprüche 1 bis 10, wobei die Modulelemente (3) durch ein anderes Transportsystem bewegbar sind.

12. Luftfahrzeug nach einem der Ansprüche 1 bis 11, wobei der Modulträger (2) mindestens einen Rumpf beliebiger Form und mindestens eine Tragfläche (10) enthält, und der Rumpf und die Tragfläche (10) ein kombiniertes Bauteil bilden.

13. Luftfahrzeug nach einem der Ansprüche 1 bis 12, wobei mindestens ein Modulelement (12) der Versorgung des Luftfahrzeugs (1) dient und mindestens ein Modulelement (12) der Entsorgung aus dem Luftfahrzeug (1).

14. Luftfahrzeug nach Anspruch 13, wobei das Versorgungsmodulelement (12) das Luftfahrzeug (1) mit mindestens einem der folgenden Medien versorgt: Brennstoff auf Kohlenwasserstoffbasis, Wasserstoff, Sauerstoff, Wasser, beliebige Gase, Flüssigkeiten oder Feststoffe, und/oder wobei das Entsorgungsmodul (12) mindestens eines der folgenden Medien entsorgt: Abwasser, beliebige Gase, Flüssigkeiten oder Feststoffe.

15. Luftfahrzeug nach einem der Ansprüche 1 bis 14, wobei das Systemelement mindestens eines ist von: Hydrauliksystemelement, Pneumatiksystemelement, Energieversorgungssystemelement, elektrisches Systemelement, Kühlsystemelement, Klimasystemelement, Wasserversorgungssystemelement, Abwasserentsorgungssystemelement, Gasversorgungssystemelement, Flüssigkeitsversorgungssystemelement, Abgasentsorgungssystemelement, Flüssigkeitsentsorgungssystemelement, Kommunikationssystemelement, Steuerungssystemelement, Datenübertragungssystemelement, Emissionselement für Wärme oder Licht, Element für Funktionen des Luftfahrzeugbetriebs, Element für Sicherheitsfunktionen, Element für Komfort oder Versorgung von Passagieren oder Besatzung, Element zum Transport von Passagieren oder Element zum Transport von Fracht.

## Revendications

1. Avion comportant:
un porteur de modules (2),
une pluralité d'éléments modulaires (3),
une pluralité d'éléments de système intégré,
dans lequel le porteur de modules reçoit la pluralité d'éléments modulaires (3),
dans lequel chaque élément modulaire (3) comporte au moins un élément de système intégré,
dans lequel un élément modulaire reçu (3) comporte une unité de propulsion pour propulser l'avion (1),
dans lequel le porteur de modules (2) comporte un élément modulaire qui forme au moins une partie d'un fuselage et/ou d'une surface portante (10),
**caractérisé en ce que** l'élément de module comportant l'unité de propulsion (4) est soit situé à l'intérieur du fuselage ou de la surface portante (10) et est accessible depuis l'extérieur sur le fuselage ou la surface portante (10), soit forme une partie de la structure de fuselage ou de la structure de surface portante.

2. Avion selon la revendication 1, dans lequel un élément modulaire reçu comporte une unité de portance pour générer de la portance de l'avion (1), et/ou une unité de transport pour le transport de passagers ou de fret.

3. Avion selon la revendication 1, dans lequel les éléments modulaires (3) sont individuellement échangeables.

4. Avion selon les revendications 1, 2 ou 3, dans lequel les éléments de système dans le cas d'un élément modulaire (3) installé ou démonté sont agencés de manière à être échangeables.

5. Avion selon l'une quelconque des revendications 1 à 4, dans lequel les éléments modulaires (3) et/ou les éléments de système forment un réseau.

6. Avion selon la revendication 5, dans lequel le réseau comportant des éléments modulaires (3) et/ou comportant des éléments de système remplit une fonction globale.

7. Avion selon l'une quelconque des revendications 5 ou 6, dans lequel le réseau comportant des éléments modulaires (3) ou des éléments de système est conçu pour être redondant.

8. Avion selon l'une quelconque des revendications 1 à 7, dans lequel en combinant divers éléments modulaires et/ou en équipant des éléments modulaires identiques avec différents éléments de système, différentes variantes d'un modèle d'avion peuvent être mises en oeuvre.

9. Avion selon la revendication 8, dans lequel tous les éléments modulaires à l'intérieur du même modèle d'avion ou avec d'autres modèles d'avion de la même conception sont échangeables, dans lequel les modèles d'avion peuvent différer en ce qui concerne leur taille, leur distance franchissable et leurs données de performance.

10. Avion selon l'une quelconque des revendications 1 à 9, dans lequel les éléments modulaires (3) peuvent être assemblés, chargés ou occupés par des passagers alors que lesdits éléments modulaires (3) sont en dehors de l'avion (1).

11. Avion selon l'une quelconque des revendications 1 à 10, dans lequel les éléments modulaires (3) peuvent être déplacés par un autre système de transport.

12. Avion selon l'une quelconque des revendications 1 à 11, dans lequel le porteur de modules (2) comporte au moins un fuselage d'une forme quelconque, et au moins une surface portante (10), le fuselage et la surface portante (10) formant un composant combiné.

13. Avion selon l'une quelconque des revendications 1 à 12, dans lequel au moins un élément modulaire (12) est utilisé pour l'alimentation de l'avion (1), et au moins un élément modulaire (12) est utilisé pour une évacuation de l'avion (1).

14. Avion selon la revendication 13, dans lequel l'élément de module d'alimentation (12) alimente l'avion (1) avec au moins un des milieux suivants : carburant à base d'hydrocarbure, hydrogène, oxygène, eau, gaz, liquides ou solides quelconques, et/ou dans lequel le module d'évacuation (12) est utilisé pour l'évacuation d'au moins un des milieux suivants : eaux usées, gaz, liquides ou solides quelconques.

15. Avion selon l'une quelconque des revendications 1 à 14, dans lequel l'élément de système est au moins un des éléments suivants : élément de système hydraulique, élément de système pneumatique, élément de système d'alimentation en énergie, élément de système électrique, élément de système de refroidissement, élément de système de climatisation, élément de système d'alimentation en eau, élément de système d'évacuation d'eaux usées, élément de système d'alimentation en gaz, élément de système d'alimentation en liquide, élément de système d'évacuation de gaz d'échappement, élément de système d'évacuation de liquide, éléments de système de communication, élément de système de commande, élément de système de transmission de données, élément d'émission de chaleur ou de lumière, élément pour fonctions de manoeuvre d'avion, élément pour fonctions de sécurité, éléments pour le confort ou l'alimentation des passagers ou de l'équipage, élément pour le transport de passagers, ou élément pour le transport de fret.
